(19) **Europäisches Patentamt / European Patent Office / Office européen des brevets**

(11) **EP 4 762 926 A1**

(12) # EUROPEAN PATENT APPLICATION

(43) Date of publication:
24.06.2026 Bulletin 2026/26

(21) Application number: 24223020.9

(22) Date of filing: 23.12.2024

(51) International Patent Classification (IPC):
**A01N 43/40** (2006.01)     **A01N 43/60** (2006.01)
**A01P 13/02** (2006.01)     **A01P 13/00** (2006.01)

(52) Cooperative Patent Classification (CPC):
(C-Sets available)
**A01N 43/40; A01P 13/00; A01P 13/02**     (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Certis Belchim bv**
**3521 AZ Utrecht (NL)**

(72) Inventors:
• **BAYART, Sébastien**
**3521 AZ Utrecht (NL)**
• **VANHASSEL, Pieter**
**3521 AZ Utrecht (NL)**
• **CHAMPROUX, Gwenaël**
**3521 AZ Utrecht (NL)**

(74) Representative: **Brantsandpatents bv**
**Pauline Van Pottelsberghelaan 24**
**9051 Ghent (BE)**

(54) **SYNERGISTICALLY EFFECTIVE HERBICIDE COMPOSITION COMPRISING FENQUINOTRIONE AND FLUROXYPYR**

(57)     The invention relates to a synergistically effective herbicide composition comprising fenquinotrione and fluroxypyr or a fluroxypyr ester, wherein said fenquinotrione and said fluroxypyr or a fluroxypyr moiety of said fluroxypyr ester are present in the composition according to a weight ratio of between 1:20 and 1:2. The invention also relates to a method of controlling undesirable vegetation, the method comprising providing a composition comprising fenquinotrione and fluroxypyr or a fluroxypyr ester, and applying said composition to undesirable vegetation associated with a crop plant, a habitat of a crop plant, or a combination thereof, wherein said fenquinotrione and said fluroxypyr or a fluroxypyr moiety of said fluroxypyr ester are present in the composition according to a weight ratio of between 1:20 and 1:2.

**EP 4 762 926 A1**

(52) Cooperative Patent Classification (CPC): (Cont.)

C-Sets
**A01N 43/40, A01N 43/60**

**Description**

**TECHNICAL FIELD**

The invention relates to a synergistically effective herbicide composition comprising fenquinotrione and fluroxypyr, and to a method of controlling undesirable vegetation using fenquinotrione and fluroxypyr.

**BACKGROUND**

In crop protection, it is in principle desirable to increase the specific action of a herbicidally active substance and the safety of operation. The herbicidal activity of many herbicides against unwanted vegetation is already on a high level, but generally depends on the application rate, the respective preparation form, the respective unwanted vegetation to be controlled or the spectrum of unwanted vegetation, the climatic and soil conditions, etc. Thus, there is frequently a need for targeted synergistic activity against specific species of unwanted vegetation, control of unwanted vegetation with better overall selectivity, generally lower amounts of active compounds used for equally good control results, and for a reduced active compound input into the environment to avoid, for example, leaching and carry-over effects. However, in the combined use of a plurality of active compounds, there are frequently phenomena of chemical, physical, or biological incompatibility, such as decomposition of an active compound or antagonism in the biological activity of the active compounds.

The present invention aims to resolve at least some of the problems mentioned above. It is furthermore an object of the present invention to provide herbicide compositions as alternatives to the prior art, or as improvements thereof.

**SUMMARY OF THE INVENTION**

A first aspect of the present invention provides a synergistically effective herbicide composition according to claim 1.

In the herbicide composition according to the first aspect of the present invention, fenquinotrione and fluroxypyr are present according to a weight ratio of between 1:20 and 1:2. Fenquinotrione and fluroxypyr have shown an unexpected increase in herbicidal activity when combined together. This increase in herbicidal activity is caused by a synergistic effect when combining fenquinotrione with fluroxypyr according to the herein described weight ratio.

Preferred embodiments of the composition are shown in dependent claims 2 to 7.

A second aspect of the present invention provides a method according to claim 8.

Preferred embodiments of the method are shown in dependent claims 9 to 15.

**DETAILED DESCRIPTION OF THE INVENTION**

The present invention concerns a synergistically effective herbicide composition and method for controlling one or more types of unwanted vegetation.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "% by weight", "weight percent", "%wt" or "wt.%", here and throughout the description unless otherwise defined, refers to the relative weight of the respective component based on the overall weight of the formulation.

Whereas the terms "one or more" or "at least one", such as one or more or at least one member(s) of a group of members, is clear per se, by means of further exemplification, the term encompasses inter alia a reference to any one of said members, or to any two or more of said members, such as, e.g., any $\geq 3$, $\geq 4$, $\geq 5$, $\geq 6$ or $\geq 7$ etc. of said members, and up to all said members.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art.

A first aspect of the present invention relates to a synergistically effective herbicide composition comprising fenquinotrione and fluroxypyr or a fluroxypyr ester, wherein said fenquinotrione and said fluroxypyr or a fluroxypyr moiety of said fluroxypyr ester are present in the composition according to a weight ratio of between 1:20 and 1:2.

The term "unwanted vegetation", as used herein, refers to all plants, such as, for example, broad-leaved weeds, weed grasses or *Cyperaceae*, which grow at sites where they are unwanted.

In light of the present invention, "fenquinotrione" is to be interpreted as a herbicide with a chemical structure defined as 2-[8-chloro-4-(4-methoxyphenyl)-3-oxo-3,4-dihydro(quinoxaline-2-carbonyl)]cyclohexane-1,3-dione, otherwise represented by the chemical formula $C_{22}H_{17}ClN_2O_5$. Fenquinotrione effectively controls a wide range of broadleaf and sedge weeds, demonstrating superior rice selectivity and efficacy against acetolactate synthase inhibitor-resistant weeds. Its mechanism of action involves the potent inhibition of 4-hydroxyphenylpyruvate dioxygenase (4-HPPD).

In a broader sense, as used herein, the term "4-HPPD inhibitors" thus refers to a group of herbicides that indirectly inhibit phytoene desaturase by inhibiting synthesis of plastoquinone (PQ), an essential cofactor for the desaturase. 4-Hydroxyphenylpyruvate dioxygenase (4-HPPD; EC 1.13.11.27) is an enzyme that is involved in the metabolic pathway for the synthesis of plastoquinone from tyrosine. This takes place in the chloroplast and is the same pathway that leads to biosynthesis of a-tocopherol, a powerful antioxidant. PQ is not only an essential cofactor for phytoene desaturase but is also an essential carrier of protons and electrons in the thylakoid membrane. Hence, 4-HPPD inhibitors not only indirectly inhibit phytoene desaturase, but may also disrupt thylakoid membrane function and reduce protection from damage by AOS. The group of 4-HPPD inhibitors includes selective herbicides for controlling unwanted vegetation belonging to the F2 classification according to the Herbicide Resistance Action Committee (HRAC) (http://www.hracglobal.com). 4-HPPD inhibitors belong to the class of herbicides inhibiting pigment synthesis, also called bleaching herbicides. The group of 4-HPPD inhibitors includes triketones, isoxazoles and pyrazoles. Examples of chemical substances of the group of 4-HPPD inhibitors include triketones, pyrazolones, isoxazoles and other 4-HPPD inhibitors. The group of triketones includes, yet is not limited to, fenquinotrione, mesotrione, sulcotrione, tembotrione, tefuryltrione, pyraquinate, quinotrione, benquinotrione, tripyrasulfone and fenpyrazone. The group of pyrazolones includes, yet is not limited to, pyrazoxyfen, pyrazolynate, benzofenap, pyrasulfotole, topramezone and tolpyralate. The group of isoxazoles includes, yet is not limited to, isoxaflutole and isoxachlortole. The so-called group of "other 4-HPPD inhibitors" includes, yet is not limited to, benzobicyclon, bicyclopyrone and metproxybicyclone.

In light of the present invention, "fluroxypyr" is to be interpreted as a selective herbicide with a chemical structure defined as [(4-amino-3,5-dichloro-6-fluoro-2-pyridinyl)oxy]acetic acid, otherwise represented by the chemical formula C7H5Cl2FNO3. Fluroxypyr and its esters, such as fluroxypyr-meptyl (fluroxypyr 1-methylheptyl ester), may be widely used as post-emergence herbicides for the control of broadleaf weeds in cereal crops, grasslands, and non-crop areas. Fluroxypyr is classified as a synthetic auxin herbicide, functioning as a mimic of natural auxins (plant growth hormones) to disrupt normal plant growth and development.

In the context of the present invention, the broad terminology of "fluroxypyr or fluroxypyr esters" will be used, which encompasses the active acid form as well as its esters, which may hydrolyse to release the active acid form *in situ.* The herbicidal activity of fluroxypyr involves its uptake by target plants and subsequent disruption of cell elongation, division, and differentiation. The selective nature of fluroxypyr allows it to effectively control susceptible broadleaf weeds while maintaining safety for grass crops. In order to simplify the definition of weight-based ratios between components, reference will be made to the "fluroxypyr moiety of fluroxypyr esters". This allows to generalize weight-based ratios based on the weight of the active fluroxypyr moiety, independently from specific ester forms.

It is noted that, salts and/or derivatives of fenquinotrione are also falling within the above definitions of fenquinotrione. Any salt is possible as long as it is agriculturally acceptable. Examples thereof include alkali metal salts such as a sodium salt and a potassium salt, alkaline earth metal salts such as a magnesium salt and a calcium salt, ammonium salts such as a monomethylammonium salt, a dimethylammonium salt and a triethylammonium salt, inorganic acid salts such as a hydrochloride, a perchlorate, a sulfate and a nitrate salt, and organic acid salts such as an acetate and a methanesulfonate salt.

The wording "synergistically effective", in light of the present invention refers to a combination of two or more substances, in this case, fenquinotrione and fluroxypyr, which when used together produce a greater effect than the sum of their individual effects. This synergism implies that the combined action of these herbicides is more effective at controlling weeds than when they are used separately. The Colby calculation is often used to quantify this synergy. It is a mathematical formula that predicts the expected effectiveness of a combination of substances based on their individual efficacies.

A synergistic effect in herbicides is always present when the herbicidal action of the active compound combination exceeds the action of the active compounds when applied individually.

The expected activity of a given combination of herbicides A and B can be calculated as follows according to a calculation method by Colby (cf. COLBY, S. R.: "Calculating synergistic and antagonistic responses of herbicide combinations", Weeds 15, pages 20-22, 1967), the equation reading:

$$E = X + Y - (X \times Y) / 100$$

wherein:

- X is the amount of damage (expressed in %) done by herbicide A at an application rate of m g/ha,
- Y is the amount of damage (expressed in %) done by herbicide B at an application rate of n g/ha, and
- E is the expected amount of damage (expressed in %) done by the combination of herbicides A and B at their respective application rates of m and n g/ha.

If the actual damage exceeds the calculated value (E), the activity of the combination is superadditive, i.e. it shows a synergistic effect. In this case, the damage actually observed must exceed the values calculated using the above formulae for the expected damage E.

The herbicidal activity of herbicides comprising fenquinotrione or fluroxypyr against unwanted vegetation (among which broad-leaved weeds, weed grasses, *Cyperaceae*) is already on a high level, but generally depends on the application rate, the respective preparation form, the respective unwanted vegetation to be controlled or the spectrum of unwanted vegetation, the climatic and soil conditions, etc. Further criteria in this context are duration of action, or the breakdown rate, of the herbicide, the general crop plant compatibility and speed of action (more rapid onset of action), the activity spectrum and behavior toward follower crops (replanting problems) or the general flexibility of application (control of unwanted vegetation in their various growth stages). If appropriate, changes in the susceptibility of unwanted vegetation, which may occur on prolonged use of the herbicides or in limited geographical regions (control of tolerant or resistant species of unwanted vegetation), may also have to be taken into account. The compensation of losses in action in the case of individual plants of unwanted vegetation by increasing the application rates of the herbicides is only possible to a certain degree, for example because such a procedure reduces the selectivity of the herbicides or because the action is not improved, even when applying higher rates.

Thus, there is frequently a need for targeted synergistic activity against specific species of unwanted vegetation, control of unwanted vegetation with better overall selectivity, generally lower amounts of active compounds used for equally good control results and for a reduced active compound input into the environment to avoid, for example, leaching and carry-over effects. There is also a need for control of species which were as yet uncontrolled (gaps) and for control of species which are tolerant or resistant to individual herbicides or to a number of herbicides. There is also a need for developing one-shot applications to avoid labor-intensive multiple applications, and also to develop systems for controlling the rate of action, where, in addition to an initial rapid control of unwanted vegetation, there is also a slow, residual control.

A possible solution to the problems mentioned above may be to provide combined herbicide compositions, that is combinations of a plurality of herbicides and/or other components from the group of the agrochemically active compounds of a different type and of formulation auxiliaries and additives customary in crop protection which contribute the desired additional properties. However, in the combined use of a plurality of active compounds, there are frequently phenomena of chemical, physical or biological incompatibility, for example decomposition of an active compound or antagonism in the biological activity of the active compounds. For these reasons, potentially suitable combinations of active compounds have to be selected in a targeted manner and tested experimentally for their suitability, it not being possible to safely discount a priori negative or positive results.

Fenquinotrione and fluroxypyr have shown an unexpected increase in herbicidal activity when combined together. This increase in herbicidal activity is caused by a synergistic effect when combining fenquinotrione with fluroxypyr according to the herein described weight ratio.

By preference, said fenquinotrione and said fluroxypyr or a fluroxypyr moiety of said fluroxypyr ester are present in the composition according to a weight ratio of between 1:15 and 9:20. More by preference, said fenquinotrione and said fluroxypyr or a fluroxypyr moiety of said fluroxypyr ester are present in the composition according to a weight ratio of between 1:14 and 9:20. Even more by preference, said fenquinotrione and said fluroxypyr or a fluroxypyr moiety of said fluroxypyr ester are present in the composition according to a weight ratio of between 1:13 and 2:5, or of between 1:12 and 2:5. Even more by preference, said fenquinotrione and said fluroxypyr or a fluroxypyr moiety of said fluroxypyr ester are present in the composition according to a weight ratio of between 1:11 and 7:20, or of between 1:10 and 7:20. Most by preference, said fenquinotrione and said fluroxypyr or a fluroxypyr moiety of said fluroxypyr ester are present in the composition according to a weight ratio of between 1:9 and 1:3. With increasing preference, within the herein specified ratio, the synergistical effect was further improved.

According to a further or another embodiment, said composition comprises from 0,2 to 25 wt.% of said fenquinotrione, based on the total weight of the composition. According to a further or another embodiment, said composition comprises from 4 to 90 wt.% of said fluroxypyr or of said fluroxypyr moiety of said fluroxypyr ester, based on the total weight of the composition. By preference, said composition comprises from 0,2 to 25 wt.% of said fenquinotrione, and from 4 to 90 wt.% of said fluroxypyr or of said fluroxypyr moiety of said fluroxypyr ester, based on the total weight of said composition.

According to a further or another embodiment, said composition comprises a fluroxypyr ester, said fluroxypyr ester being selected from the group consisting of fluroxypyr-meptyl, fluroxypyr-butoxyethyl, fluroxypyr-methyl, or combinations thereof. By preference, said fluroxypyr ester is fluroxypyr-meptyl.

In some embodiments, the composition is formulated as a suspension concentrate (SC), an oil dispersion (OD), as a water dispersible granules (WG), as an emulsifiable concentrate (EC), as a concentrated oil-in-water emulsion (EW) as a wettable powder (WP), as a micro-emulsion (ME), as a capsule suspension (CS), as a suspoemulsion (SE), or as a mixed formulation of CS and SC (ZC).

A "suspension concentrate (SC)" is a type of liquid formulation where finely divided, insoluble active ingredients are suspended in water or another liquid carrier. This formulation is designed to be diluted with water before application, providing a convenient and effective means of delivering the active ingredient to the target pest. SC formulations are stable, easy to handle, and ensure uniform distribution of the active ingredient.

In light of the present invention, the wording "oil dispersion (OD)" must be interpreted as a stable suspension of active ingredients in a water immiscible fluid, which may optionally contain other dissolved active ingredients, intended for dilution with water before use.

The term "water dispersible granules (WG)" refers to a formulation consisting of granules to be applied after disintegration and dispersion in water.

An "emulsifiable concentrate (EC)" is to be read as a liquid, homogeneous formulation to be applied as an emulsion after dilution in water, more in particular, a liquid formulation consisting of a solvent, emulsifier, and the active ingredient.

A "concentrated oil-in-water emulsion (EW)" refers to a fluid, heterogeneous formulation consisting of a solution of pesticide in an organic liquid, dispersed as fine globules in a continuous water phase.

The wording "wettable powder (WP)" reads onto a powder formulation to be applied as a suspension after dispersion in water. It forms a suspension rather than a true solution, requiring agitation to stay mixed.

A "micro-emulsion (ME)" is a clear, stable, and fine emulsion with droplet sizes significantly smaller than those in a standard emulsion, or more in particular, a clear to opalescent, oil and water containing liquid, to be applied directly or after dilution in water, when it may form a diluted micro-emulsion or a conventional emulsion.

The term "capsule suspension (CS)" in light of the present invention is to be read as a formulation wherein the active ingredient is encapsulated in tiny, polymeric capsules suspended in a liquid, normally intended for dilution with water before use. This type provides controlled release of the active ingredient, reduced exposure risk, and can enhance stability and effectiveness.

A "suspoemulsion (SE)" is a fluid, heterogeneous formulation consisting of a stable dispersion of one or more active ingredients in the form of solid particles, and of fine globules immiscible with water in a continuous water phase.

A "mixed formulation of CS and SC (ZC)" is a stable fluid suspension of capsules of one or more active ingredients combined with a suspension of fine particles of one or more active ingredients, normally intended for dilution with water before use.

According to some embodiments, the composition is formulated as an oil dispersion (OD), a concentrated oil-in-water emulsion (EW), a micro-emulsion (ME), or as a capsule suspension (CS).

According to a preferred embodiment, the composition is formulated as an oil dispersion (OD). Formulating the composition as such is beneficial in that the formulation may be easily mixed with water and has improved stability during storage. Said composition preferably comprises between 0,2 and 21 wt.% of said fenquinotrione, and between 4 and 75,6 wt.% of said fluroxypyr or said fluroxypyr moiety of said fluroxypyr ester. More by preference, said composition comprises between 0,3 and 14 wt.% of said fenquinotrione, and between 6 and 50,4 wt.% of said fluroxypyr or said fluroxypyr moiety of said fluroxypyr ester.

According to another preferred embodiment, the composition is formulated as an oil-in-water emulsion (EW). Said composition preferably comprises between 0,2 and 19 wt.% of said fenquinotrione, and between 4 and 68,4 wt.% of said fluroxypyr or said fluroxypyr moiety of said fluroxypyr ester. More by preference, said composition comprises between 0,3 and 12,66 wt.% of said fenquinotrione, and between 6 and 45,6 wt.% of said fluroxypyr or said fluroxypyr moiety of said fluroxypyr ester.

According to still another preferred embodiment, the composition is formulated as a micro-emulsion (ME). Said composition preferably comprises between 0,2 and 13 wt.% of said fenquinotrione, and between 4 and 46,8 wt.% of said fluroxypyr or said fluroxypyr moiety of said fluroxypyr ester. More by preference, said composition comprises between 0,26 and 10 wt.% of said fenquinotrione, and between 5,2 and 36 wt.% of said fluroxypyr or said fluroxypyr moiety of said fluroxypyr ester.

According to still another preferred embodiment, the composition is formulated a capsule suspension (CS). Said composition preferably comprises between 0,2 and 17 wt.% of said fenquinotrione, and between 4 and 61,2 wt.% of said fluroxypyr or said fluroxypyr moiety of said fluroxypyr ester. More by preference, said composition comprises between 0,3 and 11,33 wt.% of said fenquinotrione, and between 6 and 40,8 wt.% of said fluroxypyr or said fluroxypyr moiety of said fluroxypyr ester.

According to a further or another embodiment, said composition comprises less than 2 wt.% of residual water, based on the total weight of the composition. A low amount of residual water as described herein is beneficial towards stability during storage, as well as during application. By preference, the composition is formulated as an oil dispersion (OD), as a water dispersible granules (WG), as an emulsifiable concentrate (EC), as a wettable powder (WP), as a micro-emulsion (ME), or as a capsule suspension (CS), wherein the composition comprises less than 2 wt.% of residual water, based on the total weight of the composition.

More by preference, said composition comprises less than 1,9 wt.%, less than 1,8 wt.%, less than 1,7 wt.%, less than 1,6 wt.%, less than 1,5 wt.%, less than 1,4 wt.%, less than 1,3 wt.%, less than 1,2 wt%, or less than 1,1 wt.% of residual water, based on the total weight of the composition. With increasing preference, stability, efficacy, shelf-life and/or handling of the composition may be further improved.

Even more by preference, said composition comprises less than 1 wt.% of residual water, based on the total weight of the composition. Even more by preference, the composition is formulated as an oil dispersion (OD), as a water dispersible granules (WG), or as an emulsifiable concentrate (EC), wherein the composition comprises less than 1 wt.% of residual water, based on the total weight of the composition. Low amounts of residual water as described herein are beneficial towards stability during storage, as well as during application, and may further improve efficacy and/or handling of the composition.

According to a further or another embodiment, said composition comprises less than 1 wt.% of residual water, based on the total weight of the composition. According to some more preferred embodiments, said composition comprises less than 0,9 wt.% of residual water, less than 0,8 wt.%, less than 0,7 wt.%, less than 0,6 wt.%, less than 0,5 wt.%, less than 0,4 wt.%, less than 0,3 wt.%, less than 0,2 wt.%, or even less than 0,1 wt.% of residual water, based on the total weight of the composition.

According to a further or another embodiment, the composition comprises at least 2 wt.% of additional components, selected from the group of auxiliaries and other agrochemically active compounds, said auxiliaries preferably including the residual water, based on the total weight of the composition. For example, the composition may comprise 5 wt.% of auxiliaries, of which less than 2 wt.% is residual water, based on the total weight of the composition.

By preference, the composition comprises at least 3 wt.% of additional components, based on the total weight of the composition. More by preference, the composition comprises at least 4 wt.% of additional components, at least 5 wt.%, or at least 6 wt.% of additional components, based on the total weight of the composition. Even more by preference, the composition comprises at least 10 wt.%, at least 20 wt.%, at least 30 wt.%, at least 40 wt.%, or at least 50 wt.% of additional components, based on the total weight of the composition. Even more by preference, the composition comprises at least 60 wt.%, at least 70 wt.%, at least 80 wt.%, or even at least 90 wt.% of additional components, based on the total weight of the composition.

According to some embodiments, said additional components encompass non-fluroxypyr moieties of said fluroxypyr ester. For example, when fluroxypyr-meptyl is used, the meptyl moiety is considered part of the group of additional components.

According to some embodiments, said additional components are selected from the group comprising other pesticides such as herbicides, insecticides, fungicides, secondary 4-HHPD inhibitors, or other active pesticide ingredients, safeners, antioxidants, chemical stabilizers, adhesives, fertilizers, perfumes, colorants, liquid carriers, solid carriers, surface-active agents, crystallization inhibitors, viscosity modifiers, suspending agents, spray droplet modifiers, pigments, foaming agents, light-blocking agents, compatibility agents, antifoam agents, sequestering agents, neutralizing agents and buffers, wetting and dispersing agents, preservatives, thickening agents, corrosion inhibitors, freezing point depressants, odorants, spreading agents, penetration aids, micronutrients, emollients, lubricants, sticking agents and humectants, such as, for example, propylene glycol. According to preferred embodiments, the herbicide composition can also comprise various agrochemically active compounds, for example from the group of the acaricides, nematicides, bird repellants, and soil structure improvers.

The term 'safener', as used in this text, is to be understood as a compound or a mixture of compounds which compensates for, or reduces, the phytotoxic properties of a herbicide towards useful plants without substantially reducing the herbicidal action against unwanted vegetation.

Non-limiting examples of colorants include inorganic pigments such as iron oxide, titanium oxide and Prussian blue and/or organic dyes such as alizarin dyes, azo dyes and metal phthalocyanine, and trace elements such as iron, manganese, boron, copper, cobalt, molybdenum and zinc.

According to some embodiments, said additional components comprise herbicides selected from the group comprising acetochlor, acifluorfen, aclonifen, acrolein, AKH-7088, alachlor, alloxydim, ametryn, amicarbazone, amidosulfuron, amitrole, ammonium sulfamate, anilofos, asulam, atrazine, azafenidin, azimsulfuron, BAS 625 H, beflubutamid, benazolin, benfuralin, benfuresate, bensulfuron-methyl, bensulide, bentazone, bifenox, bilanafos, bispyribac-sodium, borax, bromacil, bromobutide, bromoxynil, butachlor, butafenacil, butamifos, butralin, butroxydim, butylate, cafenstrole, carbetamide, carfentrazone-ethyl, chloramben, chlorbromuron, chlorflurenol-methyl, chloridazon, chlorimuron-ethyl, chloroacetic acid, chlorotoluron, chlorpropham, chlorsulfuron, chlorthal-dimethyl, chlorthiamid, cinidon-ethyl, cinmethylin, cinosulfuron, clethodim, clodinafop-propargyl, clomazone, clomeprop, clopyralid, cloransulam-methyl, cumyluron, cyanazine, cycloate, cyclosulfamuron, cycloxydim, cyhalofop-butyl, 2,4-D, daimuron, dalapon, dazomet, 2,4-DB, desmedipham, dicamba, dichlobenil, dichlorprop, dichlorprop-P, diclofop-methyl, diclosulam, difenzoquat metilsulfate, diflufenican, diflufenzopyr, dimefuron, dimepiperate, dimethachlor, dimethametryn, dimethenamid, dimethipin, dimethylarsinic acid, dinitramine, dinoterb, diphenamid, diquat dibromide, dithiopyr, diuron, DNOC, endothal, EPTC, esprocarb, ethalfluralin, ethametsulfuron-methyl, ethofumesate, ethoxysulfuron, etobenzanid, fenoxaprop-P-ethyl, fentrazamide, fenuron, ferrous sulfate, flamprop-M, flazasulfuron, florasulam, fluazifop-butyl, fluazifop-P-butyl, fluazolate, flucarbazone-sodium, fluchloralin, flufenacet, flumetsulam, flumiclorac-pentyl, flumioxazin, fluometuron, fluoroglycofen-ethyl, flupropanate, flupyrsulfuron-methyl-sodium, flurenol, fluridone, flurochloridone, flurtamone, fluthiacet-methyl, fomesafen, fosamine, glufosinate-ammonium, glyphosate, halauxyfen, halauxyfen-methyl, halosulfuron-methyl, haloxyfop, HC-252, hexazinone, imazamethabenz-methyl, imazamox, imazapic, imazapyr, imazaquin, imazethapyr, imazosulfuron, indanofan, iodosulfuron-methyl-sodium, ioxynil, isoproturon, isouron, isoxaben, lactofen, lenacil, linuron, MCPA, MCPA-thioethyl, MCPB, mecoprop, mecoprop-P, mefenacet, mefluidide, metam, metamitron, metazachlor, methabenzthiazuron, methylarsonic acid, methyldymron, methyl isothiocyanate, metobenzuron, metobromuron, metolachlor, S-metolachlor, metosulam, metoxuron, metribuzin, metsulfuron-methyl, MK-616, MKH 6561, molinate, monolinuron, naproanilide, napropamide, naptalam, neburon, nicosulfuron, nonanoic acid, norflurazon, oleic acid (fatty acids), orbencarb, oryzalin, oxadiargyl, oxadiazon, oxasulfuron, oxaziclomefone, oxyfluorfen, paraquat dichloride, pebulate, pelargonic acid, pendimethalin, pentachlorophenol, pentanochlor, pentoxazone, petroleum oils, phenmedipham, picloram, picolinafen, piperophos, pretilachlor, primisulfuron-methyl, prodiamine, prometon, prometryn, propachlor, propanil, propaquizafop, propazine, propham, propisochlor, propyzamide, prosulfocarb, prosulfuron, pyraflufen-ethyl, pyrazosulfuron-ethyl, pyribenzoxim, pyributicarb, pyriminobac-methyl, pyrithiobac-sodium, quinclorac, quinmerac, quinoclamine, quizalofop, quizalofop-P, rimsulfuron, sethoxydim, siduron, simazine, simetryn, sodium chlorate, sulfentrazone, sulfometuron-methyl, sulfosulfuron, sulfuric acid, tar oils, 2,3,6-TBA, TCA-sodium, tebutam, tebuthiuron, tepraloxydim, terbacil, terbumeton, terbuthylazine, terbutryn, thenylchlor, thiazopyr, thifensulfuron-methyl, thiobencarb, tiocarbazil, tralkoxydim, tri-allate, triasulfuron, triaziflam, tribenuron-methyl, triclopyr, trietazine, trifluralin, triflusulfuron-methyl, and vernolate.

According to some embodiments, said additional components comprise herbicides of the HRAC 1 classification. By preference, said herbicide of the HRAC 1 classification is chosen from the group of clodinafop-propargyl, clofop, cyhalofop-butyl, diclofop-methyl, fenoxaprop-ethyl, fentiaprop, fluazifop-butyl, haloxyfop-methyl, isoxapyrifop, metamifop, quizalofop-ethyl, alloxydim, butroxydim, clethodim, cloproxydim, cycloxydim, profoxydim, sethoxydim, tepraloxydim, tralkoxydim, pinoxaden, or combinations thereof.

According to some embodiments, said additional components comprise herbicides of the HRAC 2 classification. By preference, said herbicides of the HRAC 2 classification are selected from the group of imazamethabenz-methyl, imazamox, imazapic, imazapyr, imazaquin, imazethapyr, bispyribac-sodium, pyribenzoxim, pyriftalid, pyriminobac-methyl, pyrithiobac-sodium, pyrimisulfan, triafamone, amidosulfuron, azimsulfuron, bensulfuron-methyl, chlorimuron-ethyl, chlorsulfuron, cinosulfuron, cyclosulfamuron, ethametsulfuron-methyl, ethoxysulfuron, flazasulfuron, flucetosulfuron, flupyrsulfuron-methyl-Na, foramsulfuron, halosulfuron-methyl, imazosulfuron, iodosulfuron-methyl-Na, mesosulfuron-methyl, metazosulfuron, metsulfuron-methyl, nicosulfuron, orthosulfamuron, oxasulfuron, primisulfuron-methyl, propyrisulfuron, prosulfuron, pyrazosulfuron-ethyl, rimsulfuron, sulfometuron-methyl, sulfosulfuron, thifensulfuron-methyl, triasulfuron, tribenuron-methyl, trifloxysulfuron-Na, triflusulfuron-methyl, tritosulfuron, flucarbazone-Na, propoxycarbazone-na, thiencarbazone-methyl, cloransulam-methyl, diclosulam, florasulam, flumetsulam, metosulam, penoxsulam, pyroxsulam, or combinations thereof.

According to some embodiments, said additional components comprise herbicides of the HRAC 3 classification. By preference, said herbicides of the HRAC 3 classification are selected from the group of propyzamide, chlorthal-dimethyl, benefin, butralin, dinitramine, ethylfluralin, fluchloralin, isopropalin, nitralin, oryzalin, pendimethalin, prodiamine, profluralin, trifluralin, butamifos, DMPA, dithiopyr, thiazopy, or combinations thereof.

According to some embodiments, said additional components comprise herbicides of the HRAC 4 classification. By preference, said herbicides of the HRAC 4 classification are selected from the group of chloramben, dicamba, TBA, benazolin-ethyl, 2,3,4-T, 2,4-D, 2,4-DB, clomeprop, dichlorprop, fenoprop, MCPA, MCPB, mecoprop, chlorfenac, chlorfenprop, aminopyralid, clopyralid, florpyrauxifen, halauxifen, picloram, triclopyr, aminocyclopyrachlor, quinmerac, quinclorac, or combinations thereof.

According to some embodiments, said additional components comprise herbicides of the HRAC 5 classification. By preference, said herbicides of the HRAC 5 classification are selected from the group of chlorprocab, desmedipham, phenisopham, phenmedipham, brompyrazon, chloridazon, ametrine, atraton, atrazine, aziprotryne, CP 17029, chlorazin, cyanazine, cyprazine, desmetryne, dimethametryn, diproetryn, eglinazine-ethyl, ipazine, methoprotryne, progrlinazine-ethyl, prometon, prometryn, propazine, sebuthylazine, secbumeton, simazine, simetryne, terbumeton, terbuthylazine, terbutryne, trietazine, procyazine, ethiozin, hexazinone, isomethiozin, metamitron, metribuzin, amicarbazone, bromacil, isocil, Lenacil, terbacil, chloranocryl, pentanochlor, propanil, benthiazuron, bromuron, buturon, chlorbromuron, chloroxuron, difenoxuron, dimefuron, diuron, ethidimuron, fenuron, fluometuron, fluothiruon, isopuroturon, isouron, linuron, methabenzthiazuron, metobenzuron, metobromuron, metoxuron, monolinuron, monuron, neburon, parafluron, siduron, tebuthiuron, thiazafluron, or combinations thereof.

According to some embodiments, said additional components comprise herbicides of the HRAC 6 classification. By preference, said herbicides of the HRAC 6 classification are selected from the group of bentazon, bromofenoxim, bromoxynil, ioxynil, or combinations thereof.

According to some embodiments, said additional components comprise herbicides of the HRAC 12 classification. By preference, said herbicides of the HRAC 12 classification are selected from the group of fluridone, flurtamone, flurochloridone, norflurazon, beflubutamid, diflufenican, picolinafen, or combinations thereof.

According to some embodiments, said additional components comprise herbicides of the HRAC 15 classification. By preference, said herbicides of the HRAC 15 classification are selected from the group of cafenstrol, fentrazamide, ipfencarbazone, fenoxasulfone, pyroxasulfone, acetochlor, alachlor, allidochlor, butachlor, butenachlor, delachlor, diethatyl-ethyl, dimethachlor, dimethenamid, metazochlor, metolachlor, pethoxamid, pretilachlor, propachlor, propisochlor, prynachlor, thenylhlor, flufenacet, mefenacet, enilofos, piperophos, benfuresate, ethofumesate, butylate, cycloate, dimepiperate, EPTC, esprocarb, molinate, orbencarb, pebulate, prosulfocarb, thiobencarb, tiocarbazil, tri-allate, vernolate, inanofan, tridiphane, or combinations thereof.

According to some embodiments, said additional components comprise herbicides of the HRAC 23 classification. By preference, said herbicides of the HRAC 23 classification are selected from the group of barban, carbetamide, chlorbufam, chlorpropham, propham, swep, or combinations thereof.

According to some embodiments, said additional components comprise herbicides of the HRAC 27 classification. By preference, said herbicides of the HRAC 27 classification are selected from the group of isoxaflutole, pyrasulfotole, tolpyralate, topramezone, benzofenap, pyrazolynate, pyrazxyfen, bicyclopyrone, mesotrione, sulcotrione, tefuryltrione, tembotrione, benzobicyclon, or combinations thereof.

According to some embodiments, said additional components comprise herbicides of the HRAC 34 classification. By preference, said herbicides of the HRAC 34 classification is amitrole.

According to some embodiments, said additional components comprise insecticides selected from the group comprising 5-(2-chloropyrid-5-ylmethyl)-3-methyl-4-nitroiminoperhydro-1,3,5-oxadiazine, 5-(2-chlorothiazol-5-yl-methyl)-3-methyl-4-nitroiminoperhydro-1,3,5-oxadiazine, 3-methyl-4-nitroimino-5-(1-oxido-3-pyridinomethyl)perhydro-1,3,5-oxadiazine, 5-(2-chloro-1-oxido-5-pyridiniomethyl)-3-methyl-4-nitroiminoperhydro-1,3,5-oxidiazine, 3-methyl-5-(2-methylpyrid-5-ylmethyl)-4-nitroiminoperhydro-1,3,5-oxadiazine, thiamethoxam (CAS RN 153719-23-4), acetamiprid ((E)-N-[(6-chloro-3-pyridinyl)methyl]-N'-cyano-N-methyleneimidamide, CAS RN 135410-20-7), imidacloprid (1-[(6-chloro-3-pyridinyl)methyl]-N-nitro-2-imidazolidinimime, CAS RN 138261-41-3), nitenpyram (N-[(6-chloro-3-pyridinyl)methyl]-N-ethyl-N'-methyl-2-nitro-1,1-ethenediamine, CAS RN 120738-89-8), clothianidin (TI-435; N-[(2-chloro-5-thiazoyl)methyl]-N'-methyl-N"-nitro,[C(E)]-(9CI)-guanidine, CAS RN 210880-92-5), dinotefuran (N-methyl-N'-nitro-N"-[(tetrahydro-3-furanyl)methyl)]guanidine; CAS RN 165252-70-0), acephate (CAS RN 30560-19-1), chlorpyrifos (CAS RN 2921-88-2), chlorpyrifos-methyl (CAS RN 5598-13-0), diazinon (CAS RN 333-41-5), fenamiphos (CAS RN 22224-92-6), malathion (CAS RN 121-75-5), aldicarb (CAS RN 116-06-3), carbaryl (CAS RN 63-25-2), carbofuran (CAS RN 1563-66-2), oxamyl (CAS RN 23135-22-0) and thiodicarb (CAS RN 59669-26-0).

According to some embodiments, said additional components comprise fungicides selected from the group comprising respiration inhibitors selected from the group comprising azoxystrobin, dimoxystrobin, enestroburin, fluoxastro-bin, kresoxim-methyl, meto-minostrobin, orysastrobin, picoxy-strobin, pyraclostrobin, pyrametostrobin, pyraoxystrobin, pyribencarb, trifloxystrobin, methyl(2-chloro-5 [1-(3-methylbenzyl-oxy-imino)-ethyl]benzyl)-carba-mate, 2 (2-(3-(2,6-dichlorophenyl)-1-methyl-allylidene-aminooxy-methyl)-phenyl)-2-methoxyimino-N methyl-acetamide, famoxadone, fenamidone, benodanil, bixafen, boscalid, carboxin, fen-furam, fenhexamid, fluopyram, flutolanil, furametpyr, isopyrazam, isotianil, mepronil, oxycarboxin, penflufen, penthiopyrad, sedaxane, tecloftalam, thifluz-amide, tiadinil, 2-amino-4 methyl-thiazole-5-carbox-anilide, N-(3',4',5' tri-fluoro-biphenyl-2 yl)-3-difluoro-methyl-1-methyl-1H-pyrazole-4 carboxamide, N-(4'-trifluoro-methyl-thiobi-phenyl-2-yl)-3 difluoromethyl-1-methyl-1H pyrazole-4-carboxamide, N-(2-(1,3,3-trimethyl-butyl)-phenyl)-1,3-dimethyl-5 fluoro-1H-pyrazole-4 carbox-amide, cyazofamid, amisulbrom, diflumetorim, binapacryl, dinobuton, dinocap, fluazinam, nitrthal-isopropyl, tecnazen, ferimzone, fentin salts, ametoctradin and silthiofam; sterol biosynthesis inhibitors (SBI fungicides) selected from the group comprising azaconazole, bitertanol, bromuconazole, cyproconazole, difenoconazole, diniconazole, diniconazole-M, epoxiconazole, fenbuconazole, fluquinconazole, flusilazole, flutriafol, hexaconazole, imibenconazole, ipconazole, metconazole, myclobutanil, paclobutrazole, penconazole, propiconazole, prothioconazole, simeconazole, tebuconazole, tetraconazole, triadimefon, triadimenol, triticonazole, uniconazole, imazalil, pefurazoate, oxpoconazole, prochloraz, triflumizole, fenarimol, nuarimol, pyrifenox, triforine, aldimorph, dodemorph, dodemorph-acetate, fenpropimorph, tridemorph, fenpropidin, piperalin, spiroxamine, fenhexamid, benalaxyl, benalaxyl-M, kiralaxyl, metalaxyl, metalaxyl-M (mefenoxam), ofurace, oxadixyl, hymexazole, octhilinone, oxolinic acid, bupirimate, benomyl, carbendazim, fuberidazole, thiabendazole, thiophanate-methyl, 5-chloro-7(4-methyl-piperidin-1-yl)-6-(2,4,6-trifluorophenyl)-[1,2,4]tri-azolo-[1,5a]pyrimidine, diethofencarb, ethaboxam, pencycuron, fluopicolide, zoxamide, metrafenone, cyprodinil, mepanipyrim, nitrapyrin, pyrimethanil, blasticidin-S, kasugamycin, kasugamycin hydrochloride-hydrate, mildiomycin, streptomycin, oxytetracyclin, polyoxine, validamycin A, fluoroimid, iprodione, procymidone, vinclozolin, fenpiclonil, fludioxonil, quinoxyfen, edifenphos, iprobenfos, pyrazophos, isoprothiolane, dicloran, quintozene, tecnazene, tolclofos-methyl, biphenyl, chloroneb, etridiazole, dimethomorph, flumorph, mandiproamid, pyrimorph, benthiavalicarb, iprovalicarb, pyribencarb, valifenalate, N-(1-(1-(4-cyano-phenyl)-ethanesulfonyl)-but-2-yl) carbamic acid-(4-fluorophenyl) ester, propamocarb, propamo-carb-hydrochlorid, Bordeaux mixture, copper acetate, copper hydroxide, copper oxychloride, basic copper sulfate, sulfur, ferbam, mancozeb, maneb, metam, methasulphocarb, metiram, propineb, thiram, zineb, ziram, anilazine, chlorothalonil, captafol, captan, folpet, dichlofluanid, dichlorophen, flusulfamide, hexachlorobenzene, pentachlorphenole and its salts, phthalide, tolylfluanid, N-(4-chloro-2-nitro-phenyl)-N-ethyl-4-methyl-benzenesulfonamide, guanidine, dodine, dodine free base, guazatine, guazatine-acetate, iminoctadine, iminoctadine-triacetate, iminoctadine-tris(albesilate), dithianon, validamycin, polyoxin B, pyroquilon, tricyclazole, carpropamide, dicyclomet, fenoxanil, acibenzolar-S-methyl, probenazole, isotianil, tiadinil, prohexadione-calcium, fosetyl, fosetyl-aluminum, phosphorous acid and its salts, bronopol, chinomethionat, cyflufenamid, cymoxanil, dazomet, debacarb, diclomezine, difenzoquat, difenzoquat-methylsulfate, diphenylamin, flumetover, flusulfamide, flutianil, methasulfocarb, oxin-copper, proquinazid, tebufloquin, tecloftalam, triazoxide, 2-butoxy-6-iodo-3-propylchromen-4-one, N-(cyclo-propylmethoxyimino-(6-difluoro-methoxy-2,3-difluoro-phenyl)-methyl)-2-phenyl acetamide, N'-(4-(4-chloro-3-trifluoromethyl-phenoxy)-2,5-dimethyl-phenyl)-N-ethyl-N methyl formamidine, N' (4-(4-fluoro-3-trifluoromethyl-phenoxy)-2,5-dimethyl-phenyl)-N-ethyl-N-methyl formamidine, N'-(2-methyl-5-trifluoromethyl-4-(3-trimethyl-silanyl-prop-oxy)-phenyl)-N-ethyl-N-methyl formamidine, N'-(5-difluoromethyl-2 methyl-4-(3-tri-methylsilanyl-propoxy)-phenyl)-N-ethyl-N-methyl formamidine, 2-{1-[2-(5-methyl-3-trifluoromethyl-pyrazole-1-yl)-acetyl]-piperid in-4-yl}-thiazole-4-ca rboxylic acid methyl-(1,2,3,4-tetrahydro-naphthalen-1-yl)-amide, 2-{1-[2-(5-meth-yl-3-trifluoromethyl-pyrazole-1-yl)-acetyl]-piperidin-4-yl}-thiazole-4-carboxylic acid methyl-(R)-1,2,3,4-tetrahydro-naphthalen-1-yl-amide, methoxy-acetic acid 6-tert-butyl-8-fluoro-2,3-dimethyl-quinolin-4-yl ester, N-Methyl-2-{1-[(5-methyl-3-trifluoro-methyl-1H-pyr-azol-1-yl)-acetyl]-piperi-din-4-yl}-N-[(1R)-1,2,3,4-tetrahydro-naphthalen-1-yl]-4-thi-azolecarboxamide, 3-[5-(4-chloro-phenyl)-2,3-dimethyl-isoxazolidin-3 yl]-pyridine, 3-[5-(4-methyl-phenyl)-2,3-dimethyl-isoxazolidin-3-yl]-pyridine, 5-amino-2-iso-propyl-3-oxo-4-ortho-tolyl-2,3-dihydro-pyrazole-1 carbothioic acid S-allyl ester, N-(6-methoxy-pyridin-3-yl)cyclopropanecarboxylic acid amide, 5-chloro-1 (4,6-dimethoxy-pyrimidin-2-yl)-2-methyl-1H-benzoimidazole, 2-(4-chloro-phenyl)-N-[4-(3,4-dimeth-oxy-phenyl)-isoxazol-5-yl]-2-prop-2-ynyloxyacetamide, abscisic acid, amidochlor, ancymidol, 6-benzylaminopurine, brassinolide, butralin, chlormequat (chlormequat chloride), choline chloride, cyclanilide, daminozide, dike-gulac, dimethipin, 2,6-dimethylpuridine, ethephon, flumetralin, flurprimidol, fluthi-acet, forchlorfenuron, gibberellic acid, inabenfide, indole-3-acetic acid, maleic hydrazide, mefluidide, mepiquat (mepiquat chloride), naphthaleneacetic acid, N 6 benzyladenine, paclobutrazol, prohexadione (prohexadione-calcium), prohydrojasmon, thidiazuron, triapenthenol, tributyl phosphorotrithioate, 2,3,5 tri iodobenzoic acid, trinexapac-ethyl and uniconazole, and antifungal biocontrol agents.

According to some embodiments, said additional components comprise secondary 4-HHPD inhibitors selected from the group of triketones, isoxazoles, pyrazoles, other 4-HHPD inhibitors, or combinations thereof. According to a further or another embodiment, said triketones are selected from the group of mesotrione, sulcotrione, tembotrione, tefuryltrione, pyraquinate, quinotrione, benquinotrione, tripyrasulfone, fenpyrazone, or combinations thereof. According to a further or another embodiment, said pyrazolones are selected from the group of pyrazoxyfen, pyrazolynate, benzofenap, pyrasulfotole, topramezone, tolpyralate, or combinations thereof. According to a further or another embodiment, said isoxazoles are selected from the group of isoxaflutole, isoxachlortole, or combinations thereof. According to a further or another embodiment, said other 4-HPPD inhibitors are selected from the group of benzobicyclon, bicyclopyr-one, metproxybicyclone, or combinations thereof.

Whilst compositions comprising fenquinotrione and fluroxypyr or a fluroxypyr ester according to the first aspect of the invention and also one or more additional pesticides such as herbicides, insecticides, fungicides or other active pesticide ingredients are disclosed above, the skilled man will appreciate that the invention extends to further multiple combinations comprising the above mixtures. For the avoidance of doubt, even if not explicitly stated here, mixing partners may also be in the form of any suitable agrochemically acceptable ester or salt, as mentioned e.g. in The Pesticide Manual, Thirteenth Edition, British Crop Protection Council, 2003.

According to some embodiments, said additional components comprise agricultural adjuvants and/or carriers.

More in particular, according to some embodiments, said additional components comprise liquid carriers, solid carriers, surface-active agents, or combinations thereof.

According to some embodiments, said liquid carriers are water and/or solvents selected from the group comprising toluene, xylene, petroleum naphtha, p-diethyl benzene, isopropyl benzene, m-xylene, o-xylene, p-xylene; cyclohexane, hexadecane, isooctane, n-hexane; paraffin oil, mineral oil, crop oil; chlorobenzene, 1,2-dichloropropane, 1.1.-trichloroethane, methylene chloride, trichloroethylene, perchloroethylene; alpha-pinene, d-limonene; lactic acid and ester derivatives, such as methyl lactate, ethyl lactate, butyl lactate, 2-ethylhexyl lactate; octadecanoic acid, oleic acid, propionic acid, xylene sulphonic acid and their ester forms; cyclohexanol, diacetone alcohol, diethylene glycol, dipropylene glycol, 2-ethyl hexanol, ethylene glycol, phenol, polyethylene glycol (PEG400), propylene glycol, triethylene glycol, methanol, ethanol, isopropanol, and higher molecular weight alcohols such as amyl alcohol, tetrahydrofurfuryl alcohol, hexanol, octanol, ethylene glycol, propylene glycol, glycerol, benzyl alcohol; acetone, methyl ethyl ketone, cyclohexanone, acetophenone, 2-butanone, 2-heptanone, gamma-butyrolactone, glycerol, isophorone, mesityl oxide, methyl isoamyl ketone, methyl isobutyl ketone; diethylene glycol butyl ether, diethylene glycol ethyl ether, 1,4-dioxane, dipropylene glycol methyl ether, propylene glycol ethers (diproxitol), ethylene glycol butyl ether, ethylene glycol methyl ether, methoxy propanol, propylene glycol monomethyl ether; alkyl acetates such as ethyl acetate, propyl acetate, n-butyl acetate, amyl acetate, isoamyl acetate, isobornyl acetate, octyl amine acetate, glycerol monoacetate, glycerol diacetate, glycerol triacetate, 2-ethyl hexyl stearate, methyl oleate, n-butyl oleate, isopropyl myristate, methyl laurate, methyl octanoate, diethylene glycol abietate, dipropylene glycol dibenzoate, propylene glycol dioleate, di-octyl succinate, di-butyl adipate, di-octyl phthalate, triethyl phosphate, dibasic esters (dimethyl glutarate + dimethyl succinate + dimethyl adipate), butyl benzoate; ethylene carbonate, propylene carbonate and butylene carbonate; diethanolamine, laurylamine, n-octylamine, oleylamine; N,N-dimethyl alkylamides such as N,N-dimethyl formamide, N,N-dimethylacetamide, N,N-dimethyl octan/decanamide, N,N-dimethyl decanamide, N,N-dimethyl dodecanamide, dimethyl lactamide; methyl 5-(dimethylamino)-4-methyl-5-oxopentanote; alkyl pyrrolidinones, such as N-methyl-2-pyrrolidinone, N-ethyl-2-pyrrolidinone; dimethyl sulfoxide; acetonitrile; acetic anhydride; and the like, soybean oil, rapeseed oil, sunflower seed oil, corn oil, cotton seed oil, linseed oil, safflower oil, olive oil, peanut oil, castor oil, palm oil, coconut oil, sesame oil, tung oil and the like; esters of the above vegetable oils, and the like.

According to some embodiments, said solid carriers include talc, titanium dioxide, pyrophyllite clay, silica, kaolin clay, attapulgite clay, kieselguhr, chalk, diatomaceous earth, lime, montmorillonite clay, lime, calcium carbonate, bentonite clay, fuller's earth, cottonseed hulls, wheat flour, soybean flour, pumice, wood floor, walnut shell flour, lignin, cellulose and the like.

A broad range of surface-active agents are advantageously employed in the above-mentioned compositions, especially those designed to be diluted with carrier before application. "Surface-active agents", also known as surfactants, are compounds that lower the surface tension (or interfacial tension) between two liquids or between a liquid and a solid.

According to some embodiments, said surface-active agents are anionic, cationic, non-ionic or polymeric in character and may act as detergents, wetting agents, emulsifiers, foaming agents, and dispersants. Many organic compounds exhibit some surface-active properties; however specifically for the purposes of the invention nonionic surface-active agents can be used. Prominent among these are the fatty alcohols, such as cetyl alcohol, stearyl alcohol, and cetostearyl alcohol (consisting predominantly of cetyl and stearyl alcohols), and oleyl alcohol; but also polyethylene glycol alkyl ethers such as octaethylene glycol monododecyl ether and pentaethylene glycol monododecyl ether; polypropylene glycol alkyl ethers; polyethylene glycol - polypropylene glycol alkyl ethers; glucoside alkyl ethers such as decyl glucoside, lauryl glucoside or octyl glucoside; polyethylene glycol octylphenyl ethers; polyethylene glycol nonylphenyl ethers; polyethylene glycol tributylphenyl ethers; polyethylene glycol tristyrylphenyl ethers; polyethylene glycol - polypropylene glycol tristyrylphenyl ethers; glycerol alkyl esters such as glyceryl laurate; polyoxyethylene glycol sorbitan alkyl esters, such as polysorbates; sorbitan alkyl esters, such as spans; cocamide MEA or DEA; dodecyldimethylamine oxide; block copolymers of polyethylene glycol and polypropylene glycol, such as poloxamers; polyethoxylated tallow amine (POEA); vegetable oil ethoxylates, such as castor oil ethoxylates, rapeseed oil ethoxylates, soybean oil ethoxylates; and the like, salts of alkyl sulfates, such as diethanolammonium lauryl sulfate; alkylarylsulfonate salts, such as calcium dodecylbenzenesulfonate; soaps, such as sodium stearate; alkylnaphthalenesulfonate salts, such as sodium dibutylnaphthalenesulfonate; dialkyl esters of sulfosuccinate salts, such as sodium di-(2-ethyl hexyl) sulfosuccinate; salts of mono and dialkyl phosphate esters; quaternary amines, such as lauryl trimethylammonium chloride and the like.

According to some embodiments, the compositions may further comprise liquid and solid fertilizers, such as particulate fertilizers like ammonium nitrate, urea and the like.

In a preferred embodiment, the herbicide composition according to the first aspect of the present invention additionally comprises one or more compounds that function to improve crop plant compatibility, selected from the group comprising 4-dichloroacetyl-1-oxa-4-aza-spiro[4.5]-decane (AD-67, MON-4660), 1-dichloroacetyl-hexahydro-3,3,8a-trimethylpyrrolo[1,2-a]-pyrimidin-6(2H)-one (dicyclonon, BAS-145138), 4-dichloroacetyl-3,4-dihydro-3-methyl-2H-1,4-benzoxazine (benoxacor), 1-methyl-hexyl 5-chloro-quinolin-8-oxy-acetate (cloquintocet-mexyl-cf. also related compounds in EP-A-86750, EP-A-94349, EP-A-191736, EP-A-492366), 3-(2-chloro-benzyl)-1-(1-methyl-1-phenyl-ethyl)-urea (cumyluron), α-(cyano methoximino)-phenylacetonitrile (cyometrinil), 2,4-dichloro-phenoxyacetic acid (2,4-D), 4-(2,4-dichloro-phenoxy)-butyric acid (2,4-DB), 1-(1-methyl-1-phenyl-ethyl)-3-(4-methyl-phenyl)-urea (daimuron, dymron), 3,6-dichloro-2-methoxy-benzoic acid (dicamba), S-1-methyl-1-phenyl-ethyl piperidine-1-thiocarboxylate (dimepiperate), 2,2-dichloro-N-(2-oxo-2-(2-propenylamino)-ethyl)-N-(2-propenyl)-acetamide (DKA-24), 2,2-dichloro-N,N-di-2-propenyl-acetamide (dichlormid), 4,6-dichloro-2-phenyl-pyrimidine (fenclorim), ethyl 1-(2,4-dichlorophenyl)-5-trichloromethyl-1H-1,2,4-triazole-3-carboxylate (fenchlorazole-ethyl-cf. also related compounds in EP-A-174562 and EP-A-346620), phenylmethyl 2-chloro-4-trifluoromethyl-thiazole-5-carboxylate (flurazole), 4-chloro-N-(1,3-dioxolan-2-yl-methoxy)-o-trifluoro acetophenone oxime (fluxofenim), 3-dichloroacetyl-5-(2-furanyl)-2,2-dimethyl-oxazolidine (furilazole, MON-13900), ethyl 4,5-dihydro-5,5-diphenyl-3-isoxazolecarboxylate (isoxadifen-ethyl-cf. also related compounds in WO-A-95/07897), 1-(ethoxycarbonyl)-ethyl 3,6-dichloro-2-methoxybenzoate (lactidichlor), (4-chloro-o-tolyloxy)-acetic acid (MCPA), 2-(4-chloro-o-tolyloxy)-propionic acid (mecoprop), diethyl 1-(2,4-dichloro-phenyl)-4,5-dihydro-5-methyl-1H-pyrazole-3,5-dicarboxylate (mefenpyr-diethyl-cf. also related compounds in WO-A-91/07874), 2-dichloromethyl-2-methyl-1,3-dioxolane (MG-191), 2-propenyl-1-oxa-4-azaspiro[4.5]decane 4-carbodithioate (MG-838), 1,8-naphthalic anhydride, α-(1,3-dioxolan-2-yl-methoximino)-phenylacetonitrile (oxabetrinil), 2,2-dichloro-N-(1,3-dioxolan-2-yl-methyl)-N-(2-propenyl)-acetamide (PPG-1292), 3-dichloroacetyl-2,2-dimethyl-oxazolidine (R-28725), 3-dichloroacetyl-2,2,5-trimethyl-oxazolidine (R-29148), 4-(4-chloro-o-tolyl)-butyric acid, 4-(4-chloro-phenoxy)-butyric acid, diphenylmethoxyacetic acid, methyl diphenylmethoxyacetate, ethyl diphenyl-methoxyacetate, methyl 1-(2-chlorophenyl)-5-phenyl-1H-pyrazole-3-carboxylate, ethyl 1-(2,4-dichloro-phenyl)-5-methyl-1H-pyrazole-3-carboxylate, ethyl 1-(2,4-dichloro-phenyl)-5-isopropyl-1H-pyrazole-3-carboxylate, ethyl 1-(2,4-dichloro-phenyl)-5-(1,1-dimethyl-ethyl)-1H-pyrazole-3-carboxylate, ethyl 1-(2,4-dichloro-phenyl)-5-phenyl-1H-pyrazole-3-carboxylate (cf also related compounds in EP-A-269806 and EP-A-333131), ethyl 5-(2,4-dichloro-benzyl)-2-isoxazoline-3-carboxylate, ethyl 5-phenyl-2-isoxazoline-3-carboxylate, ethyl 5-(4-fluoro-phenyl)-5-phenyl-2-isoxazoline-3-carboxylate (cf. also related compounds in WO-A-91/08202), 1,3-dimethyl-but-1-yl 5-chloro-quinolin-8-oxy-acetate, 4-allyloxy-butyl 5-chloro-quinolin-8-oxy-acetate, 1-allyloxy-prop-2-yl 5-chloro-quinolin-8-oxy-acetate, methyl 5-chloro-quinoxalin-8-oxyacetate, ethyl 5-chloro-quinolin-8-oxy-acetate, allyl 5-chloro-quinoxalin-8-oxyacetate, 2-oxo-prop-1-yl 5-chloro-quinolin-8-oxy-acetate, diethyl 5-chloro-quinolin-8-oxy-malonate, diallyl 5-chloro-quinoxalin-8-oxy-malonate, diethyl 5-chloro-quinolin-8-oxy-malonate (cf. also related compounds in EP-A-582198), 4-carboxy-chroman-4-yl-acetic acid (AC-304415, cf. EP-A-613618), 4-chloro-phenoxy-acetic acid, 3,3'-dimethyl-4-methoxy-benzophenone, 1-bromo-4-chloromethylsulphonyl-benzene, 1-[4-(N-2-methoxybenzoylsulphamoyl)-phenyl]-3-methyl-urea (alias N-(2-methoxy-benzoyl)-4-[(methylamino-carbonyl)-amino]-benzenesulphonamide), 1-[4-(N-2-methoxybenzoylsulphamoyl)-phenyl]-3,3-dimethyl-urea, 1-[4-(N-4,5-dimethylbenzoylsulphamoyl)-phenyl]-3-methyl-urea, 1-[4-(N-naphthylsulphamoyl)-phenyl]-3,3-dimethyl-urea, and N-(2-methoxy-5-methylbenzoyl)-4-(cyclopropylaminocarbonyl)-benzenesulphonamide.

A second aspect of the present invention concerns a method of controlling undesirable vegetation, the method comprising providing a composition comprising fenquinotrione and fluroxypyr or a fluroxypyr ester, and applying said composition to undesirable vegetation associated with a crop plant, a habitat of a crop plant, or a combination thereof, wherein said fenquinotrione and said fluroxypyr or a fluroxypyr moiety of said fluroxypyr ester are present in the composition according to a ratio of between 1:20 and 1:2.

The term "crop plant" is to be interpreted as a plant grown in significant quantities in agricultural or horticultural practices for the purpose of harvesting a product of value, such as food, feed, fiber, oil, biomass, medicinal substances, or ornamentals. Taking the aspect of "value" into account, the term "crop plant" may also be interpreted in a broader sense as a "desired plant", which may ultimately also relate to non-crops, e.g. railway tracks. In light of the present invention, when referring to the wording "habitat", indication is made to the specific environment or area in which a crop plant is cultivated. This includes the physical and biological conditions that affect the growth and development of the crop, such as soil type, climate, water availability, and the presence of other organisms.

Fenquinotrione and fluroxypyr have shown an unexpected increase in herbicidal activity when combined together. This increase in herbicidal activity is caused by a synergistic effect when combining fenquinotrione and fluroxypyr according to the herein described weight ratio. The method according to the second aspect of the present invention thus allows optimal control of unwanted vegetation.

By preference, said fenquinotrione and said fluroxypyr or a fluroxypyr moiety of said fluroxypyr ester are present in the composition according to a weight ratio of between 1:15 and 9:20. More by preference, said fenquinotrione and said fluroxypyr or a fluroxypyr moiety of said fluroxypyr ester are present in the composition according to a weight ratio of between 1:14 and 9:20. Even more by preference, said fenquinotrione and said fluroxypyr or a fluroxypyr moiety of said fluroxypyr ester are present in the composition according to a weight ratio of between 1:13 and 2:5, or of between 1:12 and 2:5. Even more by preference, said fenquinotrione and said fluroxypyr or a fluroxypyr moiety of said fluroxypyr ester are present in the composition according to a weight ratio of between 1:11 and 7:20, or of between 1:10 and 7:20. Most by preference, said fenquinotrione and said fluroxypyr or a fluroxypyr moiety of said fluroxypyr ester are present in the composition according to a weight ratio of between 1:9 and 1:3. With increasing preference, within the herein specified ratio, the synergistical effect was further improved.

According to a further or another embodiment, said composition comprises from 0,2 to 25 wt.% of said fenquinotrione, based on the total weight of the composition. According to a further or another embodiment, said composition comprises from 4 to 90 wt.% of said fluroxypyr or of said fluroxypyr moiety of said fluroxypyr ester, based on the total weight of the composition. By preference, said composition comprises from 0,2 to 25 wt.% of said fenquinotrione, and from 4 to 90 wt.% of said fluroxypyr or of said fluroxypyr moiety of said fluroxypyr ester, based on the total weight of said composition.

According to a further or another embodiment, applying said composition comprises applying said fenquinotrione in an amount of between 10 and 80 g AI/ha, and applying said fluroxypyr or said fluroxypyr moiety of said fluroxypyr ester in an amount of between 40 and 220 g AI/ha.

In light of the present invention, "active ingredient (AI)" refers to the specific chemical or compound in a product that is responsible for its desired or primary effect. In the case of herbicides, the active ingredient is the substance that provides the herbicidal activity. It is distinct from other components of the formulation, such as carriers, solvents, or additives, which are used to enhance the product's stability, application, or safety. Application amounts may thus be expressed in "grams of active ingredient per hectare (g AI/ha)".

Within the herein described application amounts, it was found that the active ingredients were optimally effective.

By preference, applying said composition comprises applying said fenquinotrione in an amount of between 10 and 80 g AI/ha, and applying said fluroxypyr or said fluroxypyr moiety of said fluroxypyr ester in an amount of between 40 and 220 g AI/ha.

According to some embodiments, applying said composition comprises applying said fenquinotrione in an amount of between 10 and 80 g AI/ha, by preference of between 15 and 75 g AI/ha, more by preference of between 20 and 70 g AI/ha, even more by preference of between 25 and 65 g AI/ha, most by preference of between 30 and 60 g AI/ha.

According to some embodiments, applying said composition comprises applying said fluroxypyr or said fluroxypyr moiety of said fluroxypyr ester in an amount of between 40 and 220 g AI/ha, by preference of between 50 and 210 g AI/ha, more by preference of between 60 and 200 g AI/ha, even more by preference of between 70 and 190 g AI/ha, even more by preference of between 80 and 185 g AI/ha, most by preference of between 90 and 180 g AI/ha.

According to some embodiments, applying said composition comprises applying said fenquinotrione in an amount of between 10 and 80 g AI/ha and applying said fluroxypyr or said fluroxypyr moiety of said fluroxypyr ester in an amount of between 40 and 220 g AI/ha. By preference, applying said composition comprises applying said fenquinotrione in an amount of between 15 and 75 g AI/ha and applying said fluroxypyr or said fluroxypyr moiety of said fluroxypyr ester in an amount of between 50 and 210 g AI/ha. More by preference, applying said composition comprises applying said fenquinotrione in an amount of between 20 and 70 g AI/ha and applying said fluroxypyr or said fluroxypyr moiety of said fluroxypyr ester in an amount of between 60 and 200 g AI/ha. Even more by preference, applying said composition comprises applying said fenquinotrione in an amount of between 25 and 65 g AI/ha and applying said fluroxypyr or said fluroxypyr moiety of said fluroxypyr ester in an amount of between 70 and 190 g AI/ha. Most by preference, applying said composition comprises applying said fenquinotrione in an amount of between 30 and 60 g AI/ha and applying said fluroxypyr or said fluroxypyr moiety of said fluroxypyr ester in an amount of between 90 and 180 g AI/ha.

According to a further or another embodiment, the undesirable vegetation is a weed.

According to some embodiments, said undesirable vegetation is selected from the group of *Abutilon theophrasti* (ABUTH), *Aethusa cynapium* (AETCY), *Alisma plantago-aquatica* (ALSPA), *Ambrosia artemisiifolia* (AMBEL), *Ammannia coccinea* (AMMCO), *Ammannia robusta* (AMMRB), *Murdannia keisak* (ANEKE), *Anthriscus caucalis* (ANRCA), *Atriplex patula* (ATXPA), *Bacopa rotundifolia* (BAORO), *Bidens frondosa* (BIDFR), *Brassica napus L.* (BRSNN), *Butomus umbellatus* (BUTUM), *Capsella bursa-pastoris (L.) Medik.* (CAPBP), *Centaurea cyanus L.* (CENCY), *Chenopodium album* (CHEAL), *Cirsium arvense* (CIRAR), *Convolvulus arvensis* (CONAR), *Cyperus difformis* (CYPDI), *Cyperus esculentus* (CYPES), *Echinochloa crus-galli* (ECHCG), *Echnochloa oryzoides* (ECHOR), *Heteranthera reniformis* (HETRE), *Galium aparine L.* (GALAP), *Geranium mole* (GERMO), *Lamium purpureum* (LAMPU), *Matricaria chamomilla* (MATCH), *Mercurialis annua L.* (MERAN), *Myosotis arvensis (L.) Hill* (MYOAR), *Panicum dichotomiflorum* (PANDI), *Papaver rhoeas L.* (PAPRH), *Poa annua* (POAAN), *Fallopia convolvulus (L.) A Löve* (POLCO), *Persicaria lapathifolia (L.) Delarbre* (POLLA), *Persicaria maculosa* (POLPE), *Portulaca oleracea* (POROL), *Senecio vulgaris L.* (SENVU), *Setaria viridis* (SETVI), *Solanum nigrum* (SOLNI), *Stellaria media* (STEME), *Veronica persica* (VERPE), *Viola arvensis* (VIOAR), dicotyledonous weed plants (TTTDD), or combinations thereof.

By preference, said undesirable vegetation is selected from the group of *Brassica napus L.* (BRSNN), *Capsella bursa-pastoris (L.) Medik.* (CAPBP), *Centaurea cyanus L.* (CENCY), *Galium aparine L.* (GALAP), *Mercurialis annua L.* (MERAN), Myosotis arvensis (L.), *Papaver rhoeas L.* (PAPRH), *Fallopia convolvulus (L.) Á. Löve* (POLCO), *Persicaria lapathifolia (L.) Delarbre* (POLLA), *Senecio vulgaris L.* (SENVU), or combinations thereof.

According to a further or another embodiment, said crop plant is selected from the group of monocotyledonous plants (PPPMM).

According to a further or another embodiment, said crop plant is selected from the group of cereal crops, meadow crops, or combinations thereof.

According to a further or another embodiment, said crop plant is a cereal crop selected from the group consisting of winter wheat (TRZAW), spring wheat (TRZAS), winter barley (HORVW), spring barley (HORVS), spring triticale (TTLSO), winter triticale (TTLWI), winter rye (SECCW), spring rye (SECCS), spring oat (AVESP), winter oat (AVESW), spelt wheat (TRZSP), durum wheat (TRZDU), spring durum wheat (TRZDS), or combinations thereof.

According to a further or another embodiment, said crop plant is a meadow crop selected from the group consisting of *Lolium sp.* (LOLSS), *Dactylella sp.* (DCLLSP), or combinations thereof.

According to some preferred embodiments, the method of the second aspect makes use of a synergistically active herbicide composition according to the first aspect of the invention.

According to some embodiments, the composition of the invention may be applied as a tank mix comprising two or more tank mix parts. A first tank mix part herein comprises at least said fenquinotrione and said said fluroxypyr or said fluroxypyr moiety of said fluroxypyr ester, and a second tank mix part may comprise one or more additional components as described in any of the aforementioned embodiments.

According to some embodiments, the composition of the invention may be applied as part of an application program, wherein a first application comprises applying at least said fenquinotrione and said fluroxypyr or said fluroxypyr moiety of said fluroxypyr ester. In a subsequent second, third or fourth application, one or more additional components as described in any of the aforementioned embodiments may be applied.

## EXAMPLES

Example 1. Exemplary embodiments of synergistically effective herbicide compositions according to the invention.

Table 1 delineates exemplary embodiments of herbicidal compositions encompassing fenquinotrione and fluroxypyr or the fluroxypyr moiety of a fluroxypyr ester as the active constituents. These embodiments are illustrative of the synergistic weight ratios that fall within the scope of the present invention, as detailed in the appended claims. The compositions are presented in various formulation types including oil dispersion (OD), oil-in-water emulsion (EW), micro-emulsion (ME), capsule suspension (CS), and others, each tailored to optimize application efficacy and handling characteristics. The specified weight percentages of fenquinotrione and the fluroxypyr (moiety) are judiciously chosen to maintain the physical stability of the formulations and to conform to the efficacious range for target weed species control.

Additionally, the residual water content is chosen as such to ensure product integrity and prolong shelf life. These examples are provided to exemplify the breadth of the inventive compositions and are not intended to limit the scope of the invention as defined by the claims.

Table 1. Exemplary compositions according to the invention.

| Formulation type | Fenquinotrione (wt.%) | Fluroxypyr or fluroxypyr moiety of fluroxypyr ester (w.t%) | Additional components (wt. %) |
|---|---|---|---|
| OD | 0,3 | 6,0 | 93,7 |
| OD | 0,9 | 11,6 | 87,5 |
| OD | 2,9 | 10,5 | 86,6 |
| OD | 4,6 | 19,2 | 76,2 |
| OD | 11,1 | 40,5 | 48,4 |
| OD | 14,0 | 50,4 | 35,6 |
| EW | 0,3 | 6,0 | 93,7 |
| EW | 0,8 | 9,0 | 90,2 |
| EW | 2,7 | 9,1 | 88,2 |
| EW | 3,6 | 20,1 | 76,3 |
| EW | 5,9 | 33,9 | 60,2 |
| EW | 12,7 | 45,6 | 41,7 |
| ME | 0,3 | 5,2 | 94,5 |
| ME | 2,2 | 10 | 87,8 |
| ME | 4,3 | 10,3 | 85,4 |
| ME | 6,6 | 26,4 | 67,0 |

(continued)

| Formulation type | Fenquinotrione (wt.%) | Fluroxypyr or fluroxypyr moiety of fluroxypyr ester (w.t%) | Additional components (wt. %) |
|---|---|---|---|
| ME | 8,1 | 27,4 | 64,5 |
| ME | 10,0 | 36,0 | 54,0 |
| CS | 0,3 | 6,0 | 93,7 |
| CS | 2,3 | 10,1 | 87,6 |
| CS | 4,3 | 23,4 | 72,3 |
| CS | 6,7 | 16,2 | 77,1 |
| CS | 9,8 | 39,9 | 50,3 |
| CS | 11,4 | 40,8 | 47,8 |

Example 2. Application of synergistically effective herbicide compositions according to some embodiments of the invention during pot trials.

In the present example, herbicidal activity of herbicide compositions according to the first aspect of the present invention with regard to different types of unwanted vegetation was determined during pot trials.

Individual compositions comprising fenquinotrione and individual compositions comprising fluroxypyr or a fluroxypyr ester are compared with a herbicide composition according to the invention comprising both fenquinotrione and fluroxypyr or a fluroxypyr ester. The expected activity of the combination of the active compounds fenquinotrione and fluroxypyr or the fluroxypyr moiety of a fluroxypyr ester is calculated according to the calculation method by Colby, in order to evaluate a synergistic effect between fenquinotrione and fluroxypyr or the fluroxypyr moiety of a fluroxypyr ester. If the actual herbicidal activity exceeds the calculated value, the activity of the combination is superadditive, i.e. it shows a synergistic effect.

Herbicidal activity was determined by applying herbicide compositions on emerged unwanted vegetation in pots. Fenquinotrione and a fluroxypyr or a fluroxypyr ester were applied as a tank mixture by mixing these active compounds prior to use in a spray tank. The corresponding mixture was in the form of a spray liquor. Besides, spray liquors of individual compositions comprising fenquinotrione and of individual compositions comprising fluroxypyr or a fluroxypyr ester were used. Test plants of unwanted vegetation with a growth stage corresponding to BBCH 10-18 (according to the extended BBCH-scale) were sprayed with the active compound preparations such that particular desired amounts of active compounds are applied per unit area. Spray liquor was diluted with water to arrive at an application volume of 0,5 to 1,5 L/ha. At a specified number of days after application (DAA), the degree of damage to the unwanted vegetation is rated in percentage (%) of plants of unwanted vegetation that were killed, which was assessed by visually controlling the plants. The test results of Example 2 are shown in Table 2.

Table 2. Test results of Example 2, showing herbicidal effect (h.e.) against different types of unwanted vegetation (UVEG) of a herbicide composition according to the first aspect of the present invention comprising fenquinotrione (FEN) and a fluroxypyr ester (FLX), named "FEN + FLX", compared to herbicide compositions comprising FEN or FLU individually. The FLX amounts indicated concern fluroxypyr or the fluroxypyr moiety of a fluroxypyr ester. In the present example, fluroxypyr-meptyl was used. Shown data are based on 1 trial. Synergistic effect of "FEN + FLX" is evaluated by comparison against the expected h.e. of the combination of the active compounds calculated according to the calculation method by Colby.

| UVEG / DAA / number of trials (#) | FEN (g A.I./ha) | FEN h.e. (%) | FLX (g A. I./ha) | FLX h.e. (%) | FEN + FLX (g A.I. FEN + G A.I. FLX) | FEN + FLX h.e. (%) | Colby h.e. (%) |
|---|---|---|---|---|---|---|---|
| GALAP / 14 DAA / # = 1 | 30 | 15 | 135 | 37,5 | 30 + 135 | 47,5 | 46,88 |
| GALAP / 27 DAA / # = 1 | 30 | 15 | 135 | 72,5 | 30 + 135 | 78,8 | 76,63 |
| GALAP / 42 DAA / # = 1 | 30 | 34,8 | 90 | 83,1 | 30 + 90 | 90,3 | 88,98 |
| MYOAR / 14 DAA / # = 1 | 30 | 22,5 | 135 | 45,5 | 30 + 135 | 67,5 | 59,31 |
| MYOAR / 42 DAA / # = 1 | 30<br>45<br>20 | 78,8<br>86,3<br>67,5 | 135<br>135<br>180 | 66,3<br>66,3<br>78,8 | 30 + 135<br>45 + 135<br>20 + 180 | 95<br>98,8<br>98 | 92,86<br>95,38<br>93,11 |

(continued)

| UVEG / DAA / number of trials (#) | FEN (g A.I./ha) | FEN h.e. (%) | FLX (g A. l./ha) | FLX h.e. (%) | FEN + FLX (g A.I. FEN + G A.I. FLX) | FEN + FLX h.e. (%) | Colby h.e. (%) |
|---|---|---|---|---|---|---|---|
| MYOAR / 56 DAA / # = 1 | 45 | 74,47 | 135 | 79,78 | 45 + 135 | 96,45 | 94,84 |
|  | 20 | 53,93 | 180 | 71,52 | 20 + 180 | 94,23 | 86,88 |
|  | 20 | 53,93 | 60 | 67,25 | 20 + 60 | 85,47 | 84,91 |
|  | 45 | 74,47 | 180 | 71,52 | 45 + 180 | 94,29 | 92,73 |
| CENCY / 42 DAA / # = 1 | 60 | 0 | 90 | 85,3 | 60 + 90 | 90 | 85,3 |
|  | 45 | 0 | 90 | 85,3 | 45 + 90 | 87,4 | 85,3 |
|  | 60 | 0 | 135 | 89,1 | 60 + 135 | 92,6 | 89,1 |
|  | 60 | 0 | 180 | 91,2 | 60 + 180 | 91,7 | 91,2 |
|  | 30 | 0 | 90 | 85,3 | 30 + 90 | 86,5 | 85,3 |
|  | 20 | 0 | 60 | 78,8 | 20 + 60 | 78,9 | 78,8 |
|  | 45 | 0 | 180 | 91,2 | 45 + 180 | 93,9 | 91,2 |
|  | 30 | 0 | 135 | 89,1 | 30 + 135 | 93 | 89,1 |
|  | 20 | 0 | 180 | 91,2 | 20 + 180 | 91,9 | 91,2 |

In the above table, the following abbreviations are used: DAA = days after application; A.I. = active compound; GALAP = *Galium aparine L.*; MYOAR = *Myosotis arvensis (L.) Hill*; and CENCY = *Centaurea cyanus L.*

Example 3. Application of synergistically effective herbicide compositions according to some embodiments of the invention on a field where *cereal* was cultivated.

In the present example, herbicidal activity of herbicide compositions according to the first aspect of the present invention with regard to different types of unwanted vegetation was determined during trials performed on test fields (field trials). Individual compositions comprising fenquinotrione and individual compositions comprising fluroxypyr or a fluroxypyr ester are compared with a herbicide composition according to the invention comprising both fenquinotrione and fluroxypyr or a fluroxypyr ester. The expected activity of the combination of the active compounds fenquinotrione and fluroxypyr or the fluroxypyr moiety of a fluroxypyr ester is calculated according to the calculation method by Colby, in order to evaluate a synergistic effect between fenquinotrione and fluroxypyr or the fluroxypyr moiety of a fluroxypyr ester. If the actual herbicidal activity exceeds the calculated value, the activity of the combination is superadditive, i.e. it shows a synergistic effect.

Herbicidal activity was determined by applying herbicide compositions on emerged unwanted vegetation on fields where maize, rice or cereal was cultivated. Fenquinotrione and a fluroxypyr or a fluroxypyr ester were applied as a tank mixture by mixing these active compounds prior to use in a spray tank. The corresponding mixture was in the form of a spray liquor. Besides, spray liquors of individual compositions comprising fenquinotrione and of individual compositions comprising fluroxypyr or a fluroxypyr ester were used. Test plants of unwanted vegetation with a growth stage corresponding to BBCH 10-18 (according to the extended BBCH-scale) were sprayed with the active compound preparations such that particular desired amounts of active compounds are applied per unit area. Spray liquor was diluted with water to arrive at an application volume of 50 to 450 L/ha. At a specified number of days after application (DAA), the degree of damage to the unwanted vegetation is rated in percentage (%) of plants of unwanted vegetation that were killed, which was assessed by visually controlling the plants. The test results of Example 3 are shown in Table 3.

Table 3. Test results of Example 3, showing herbicidal effect (h.e.) against different types of unwanted vegetation (UVEG) of a herbicide composition according to the first aspect of the present invention comprising fenquinotrione (FEN) and a fluroxypyr ester (FLX), named "FEN + FLX", compared to herbicide compositions comprising FEN or FLU individually. The FLX amounts indicated concern fluroxypyr or the fluroxypyr moiety of a fluroxypyr ester. In the present example, fluroxypyr-meptyl was used. Shown data are average values of 1-6 trials. Synergistic effect of "FEN + FLX" is evaluated by comparison against the expected h.e. of the combination of the active compounds calculated according to the calculation method by Colby.

| UVEG / DAA / number of trials (#) | FEN (g A.I./ha) | FEN h.e. (%) | FLX (g A.I./ha) | FLX h.e. (%) | FEN + FLX (g A.I. FEN + G A.I. FLX) | FEN + FLX h.e. (%) | Colby h.e. (%) |
|---|---|---|---|---|---|---|---|
| BRSNN / 28-43 DAA / * = 3 | 40 | 96 | 120 | 47 | 40 + 120 | 99 | 98,12 |

(continued)

| UVEG / DAA / number of trials (#) | FEN (g A.I./ha) | FEN h.e. (%) | FLX (g A.I./ha) | FLX h.e. (%) | FEN + FLX (g A.I. FEN + G A.I. FLX) | FEN + FLX h.e. (%) | Colby h.e. (%) |
|---|---|---|---|---|---|---|---|
| CAPBP / 28 DAA / # = 1 | 40 | 93 | 120 | 10 | 40 + 120 | 95 | 93,25 |
| CENCY / 28-33 DAA / # = 2 | 40 | 88 | 120 | 79 | 40 + 120 | 98 | 97,43 |
| GALAP / 28-104 DAA / # = 6 | 40 | 80 | 120 | 94 | 40 + 120 | 99 | 98,72 |
| MERAN / 53 DAA / # = 1 | 40 | 63 | 120 | 80 | 40 + 120 | 97 | 92,66 |
| PAPRH / 28-33 DAA / # = 2 | 40 | 97 | 120 | 5 | 40 + 120 | 100 | 97,06 |
| POLCO / 28-53 DAA / # = 3 | 40 | 51 | 120 | 92 | 40 + 120 | 98 | 96,16 |
| POLLA / 29 DAA / # = 1 | 40 | 85 | 120 | 89 | 40 + 120 | 100 | 98,39 |
| SENVU / 56 DAA / # = 1 | 40 | 93 | 120 | 83 | 40 + 120 | 100 | 98,88 |

In the above table, the following abbreviations are used: DAA = days after application; A.I. = active compound; BRSNN = *Brassica napus L.*; CAPBP = *Capsella bursa-pastoris (L.) Medik.*; CENCY = *Centaurea cyanus L.*; GALAP = *Galium aparine L.*; MERAN = *Mercurialis annua L.*; PAPRH = *Papaever rhoeas L.*; POLCO = *Fallopia convolvulus (L.) Á. Löve*, POLLA = *Persicaria lapathifolia (L.) Delarbre*, and SENVU = *Senecio vulgaris L.*

**Claims**

1. A synergistically effective herbicide composition comprising fenquinotrione and fluroxypyr or a fluroxypyr ester, **characterized in that**, said fenquinotrione and said fluroxypyr or a fluroxypyr moiety of said fluroxypyr ester are present in the composition according to a weight ratio of between 1:20 and 1:2.

2. The composition according to claim 1, **characterized in that**, said fenquinotrione and said fluroxypyr or said fluroxypyr moiety of said fluroxypyr ester are present in the composition according to a weight ratio of between 1:9 and 1:3.

3. The composition according to claim 1 or 2, **characterized in that**, said composition comprises:

   from 0,2 to 25 wt.% of said fenquinotrione, and
   from 4 to 90 wt.% of said fluroxypyr or of said fluroxypyr moiety of said fluroxypyr ester,

   based on the total weight of the composition.

4. The composition according to any one of preceding claims 1-3, **characterized in that**, said composition comprises a fluroxypyr ester, said fluroxypyr ester being selected from the group consisting of fluroxypyr-meptyl, fluroxypyr-butoxyethyl, fluroxypyr-methyl, or combinations thereof.

5. The composition according to any one of preceding claims 1-4, **characterized in that**, said composition comprises at least 10 wt.% of additional components selected from the group of auxiliaries and other agrochemically active compounds based on the total weight of the composition.

6. The composition according to any one of preceding claims 1-5, **characterized in that**, said composition is formulated as an oil dispersion (OD), a concentrated oil-in-water emulsion (EW), a micro-emulsion (ME), or as a capsule suspension (CS)

7. The composition according to any one of preceding claims 1-6, **characterized in that**, said composition is formulated as an oil dispersion (OD) or as a micro-emulsion (ME), wherein said composition comprises less than 2 wt.% of residual water, preferably less than 1 wt.% of residual water, based on the total weight of the composition.

8. A method of controlling undesirable vegetation, the method comprising:

providing a composition comprising fenquinotrione and fluroxypyr or a fluroxypyr ester, and
applying said composition to undesirable vegetation associated with a crop plant, a habitat of a crop plant, or a combination thereof, **characterized in that**, said fenquinotrione and said fluroxypyr or a fluroxypyr moiety of said fluroxypyr ester are present in the composition according to a ratio of between 1:20 and 1:2.

9. The method according to claim 8, **characterized in that**, said fenquinotrione and said fluroxypyr or said fluroxypyr moiety of said fluroxypyr ester are present in the composition according to a weight ratio of between 1:9 and 1:3.

10. The method according to claim 8 or 9, **characterized in that**, said composition comprises:

from 0,2 to 25 wt.% of said fenquinotrione, and
from 4 to 90 wt.% of said fluroxypyr or of said fluroxypyr moiety of said fluroxypyr ester, based on the total weight of the composition.

11. The method according to any one of preceding claims 8-10, **characterized in that**, applying said composition comprises applying said fenquinotrione in an amount of between 10 and 80 g AI/ha, and applying said fluroxypyr or said fluroxypyr moiety of said fluroxypyr ester in an amount of between 40 and 220 g AI/ha.

12. The method according to any one of preceding claims 8-11, **characterized in that**, applying said composition comprises applying said fenquinotrione in an amount of between 30 and 60 g AI/ha, and applying said fluroxypyr or said fluroxypyr moiety of said fluroxypyr ester in an amount of between 90 and 180 g AI/ha.

13. The method according to any one of preceding claims 8-12, **characterized in that**, the undesirable vegetation is a weed.

14. The method according any one of preceding claims 8-13, **characterized in that**, said undesirable vegetation is selected from the group of *Abutilon theophrasti* (ABUTH), *Aethusa cynapium* (AETCY), *Alisma plantago-aquatica* (ALSPA), *Ambrosia artemisiifolia* (AMBEL), *Ammannia coccinea* (AMMCO), *Ammannia robusta* (AMMRB), *Murdannia keisak* (ANEKE), *Anthriscus caucalis* (ANRCA), *Atriplex patula* (ATXPA), *Bacopa rotundifolia* (BAORO), *Bidens frondosa* (BIDFR), *Brassica napus L.* (BRSNN), *Butomus umbellatus* (BUTUM), *Capsella bursa-pastoris (L.) Medik.* (CAPBP), *Centaurea cyanus L.* (CENCY), *Chenopodium album* (CHEAL), *Cirsium arvense* (CIRAR), *Convolvulus arvensis* (CONAR), *Cyperus difformis* (CYPDI), *Cyperus esculentus* (CYPES), *Echinochloa crus-galli* (ECHCG), *Echnochloa oryzoides* (ECHOR), *Heteranthera reniformis* (HETRE), *Galium aparine L.* (GALAP), *Geranium mole* (GERMO), *Lamium purpureum* (LAMPU), *Matricaria chamomilla* (MATCH), *Mercurialis annua L.* (MERAN), *Myosotis arvensis (L.) Hill* (MYOAR), *Panicum dichotomiflorum* (PANDI), *Papaver rhoeas L.* (PAPRH), *Poa annua* (POAAN), *Fallopia convolvulus (L.) A Löve* (POLCO), *Persicaria lapathifolia (L.) Delarbre* (POLLA), *Persicaria maculosa* (POLPE), *Portulaca oleracea* (POROL), *Senecio vulgaris L.* (SENVU), *Setaria viridis* (SETVI), *Solanum nigrum* (SOLNI), *Stellaria media* (STEME), *Veronica persica* (VERPE), *Viola arvensis* (VIOAR), dicotyledonous weed plants (TTTDD), or combinations thereof.

15. The method according to claim 14, **characterized in that**, said undesirable vegetation is selected from the group of *Brassica napus L.* (BRSNN), *Capsella bursa-pastoris (L.) Medik.* (CAPBP), *Centaurea cyanus L.* (CENCY), *Galium aparine L.* (GALAP), *Mercurialis annua L.* (MERAN), Myosotis arvensis (L.), *Papaver rhoeas L.* (PAPRH), *Fallopia convolvulus (L.) Á. Löve* (POLCO), *Persicaria lapathifolia (L.) Delarbre* (POLLA), *Senecio vulgaris L.* (SENVU), or combinations thereof.

Europäisches
Patentamt
European
Patent Office
Office européen
des brevets

**EUROPEAN SEARCH REPORT**

Application Number

EP 24 22 3020

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2012/021908 A1 (DUNNE CHERYL LYNN [US] ET AL) 26 January 2012 (2012-01-26)<br>* claims 2, 9, 12-16 *<br>* page 1, paragraph 3 *<br>----- | 1-15 | INV.<br>A01N43/40<br>A01N43/60<br>A01P13/02<br>A01P13/00 |

TECHNICAL FIELDS
SEARCHED (IPC)

A01N
A01P

The present search report has been drawn up for all claims

| Place of search | Date of completion of the search | Examiner |
|---|---|---|
| Munich | 6 May 2025 | Marie, Gérald |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 22 3020

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2025

| Patent document cited in search report | Publication date | Patent family member(s) | | Publication date |
|---|---|---|---|---|
| US 2012021908 A1 | 26-01-2012 | AU | 2007275266 A1 | 24-01-2008 |
| | | CA | 2657795 A1 | 24-01-2008 |
| | | CN | 101511194 A | 19-08-2009 |
| | | EP | 2046129 A2 | 15-04-2009 |
| | | JP | 5296681 B2 | 25-09-2013 |
| | | JP | 2009543889 A | 10-12-2009 |
| | | KR | 20090048598 A | 14-05-2009 |
| | | TW | 200819048 A | 01-05-2008 |
| | | US | 2012021908 A1 | 26-01-2012 |
| | | US | 2013274105 A1 | 17-10-2013 |
| | | US | 2016106097 A1 | 21-04-2016 |
| | | WO | 2008011511 A2 | 24-01-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 86750 A
- EP 94349 A
- EP 191736 A
- EP 492366 A
- EP 174562 A
- EP 346620 A
- WO 9507897 A
- WO 9107874 A
- EP 269806 A
- EP 333131 A
- WO 9108202 A
- EP 582198 A
- EP 613618 A

**Non-patent literature cited in the description**

- **COLBY, S. R.** Calculating synergistic and antagonistic responses of herbicide combinations. *Weeds*, 1967, vol. 15, 20-22
- *CHEMICAL ABSTRACTS*, 153719-23-4
- *CHEMICAL ABSTRACTS*, 135410-20-7
- *CHEMICAL ABSTRACTS*, 138261-41-3
- *CHEMICAL ABSTRACTS*, 120738-89-8
- *CHEMICAL ABSTRACTS*, 210880-92-5
- *CHEMICAL ABSTRACTS*, 165252-70-0
- *CHEMICAL ABSTRACTS*, 30560-19-1
- *CHEMICAL ABSTRACTS*, 2921-88-2
- *CHEMICAL ABSTRACTS*, 5598-13-0
- *CHEMICAL ABSTRACTS*, 333-41-5
- *CHEMICAL ABSTRACTS*, 22224-92-6
- *CHEMICAL ABSTRACTS*, 121-75-5
- *CHEMICAL ABSTRACTS*, 116-06-3
- *CHEMICAL ABSTRACTS*, 63-25-2
- *CHEMICAL ABSTRACTS*, 1563-66-2
- *CHEMICAL ABSTRACTS*, 23135-22-0
- *CHEMICAL ABSTRACTS*, 59669-26-0
- The Pesticide Manual. British Crop Protection Council, 2003